# EUROPÄISCHE PATENTANMELDUNG

(11) **EP 0 853 210 A1**
(43) Veröffentlichungstag der Anmeldung: **15.07.1998**
(21) Anmeldenummer: 98100130.8
(22) Anmeldetag: 07.01.1998
(51) Int. Cl.: F16L 25/02

(54) **Isolierung einer Schlauch- und/oder Rohrverbindungskupplung**

(30) Priorität: 08.01.1997 DE 29700181 U
(71) Anmelder: HSB Umwelttechnik GmbH, 58675 Hemer (DE)
(72) Erfinder: Schulte, Hubert, 58710 Menden (DE)
(74) Vertreter: Valentin, Ekkehard, Dipl.-Ing.

(57) **Zusammenfassung**

Die Erfindung betrifft eine Isolierung einer Verbindungskupplung zwischen Schläuchen oder zwischen Rohren bzw. zwischen Schläuchen und Rohren, umfassend jeweils ein Paar mittels einer Außen/Innen-Rohrgewindekombination (41) verbindbare Kupplungshälften (15-18) mit je einem Grundkörper (51) aus Metall. Zumindest das Innengewinde (40) der einen Kupplungshälfte ist zu einem Formstück (50) aus elektrisch nicht-leitendem Material ausgebildet. Das Formstück (50) ist im Grundkörper (51) der Kupplungshälfte eingebettet und ist mit diesem vorzugsweise untrennbar verbunden.

## Beschreibung

Die Erfindung betrifft eine Isolierung einer Verbindungskupplung zwischen Schläuchen oder zwischen Rohren oder zwischen Schläuchen und Rohren umfassend jeweils ein Paar mittels einer Außen/Innenkombination eines Rohrgewindes verbindbare Kupplungshälften mit je einem Grundkörper aus Metall.

Die Erfindung betrifft insbesondere eine solche Isolierung bei einer Vorrichtung zur Überwachung des Umfüllvorganges zwischen einem Tankfahrzeug und einem unterirdischen Lagerbehälter, wobei Schläuche mit Anschlußarmaturen einer Umfüllvorrichtung des Tankfahrzeugs, mit einer Spannungsversorgung und mit einem die Umfüllvorrichtung schaltenden Füllstands-Grenzwertgeber zusammenwirkbar an Umfüllrohre des Lagerbehälters anschließbar sind und der Grenzwertgeber bei fehlerhaftem Umfüllvorgang den Stromkreis und damit die Umfüllvorrichtung abschaltet, wobei ein eigensicherer Stromkreis über leitfähige Schläuche des Tankwagens geschlossen und die Isolierungen zur Verhinderung eines unkontrollierbaren Nebenschlusses über die Rohre sowie die Kupplungen in die Rohre einsetzbar sind.

Zu diesem Zweck werden bislang zwischen Kupplungen und Rohre jeweils Kunststoffisolierstücke eingesetzt, die einen möglichen unkontrollierbaren Nebenschluß infolge unvollständiger Isolierung zwischen Kupplung und Rohr verhindern.

Bei dieser Ausgestaltung der Isolierungen durch Kunststoff-Isolierstücke hat sich nachteilig herausgestellt, daß diese aufgrund der hohen mechanischen Beanspruchung eine Schwachstelle bilden.

Der Erfindung liegt die Aufgabe zugrunde, diese Schwachstelle wirkungsvoll zu beseitigen und eine verbesserte Ausführung der Isolierung anzugeben, die den hohen mechanischen Beanspruchungen und den Anforderungen an die Isolierfähigkeit vollständig gewachsen sind und auch im Laufe längerer Betriebszeiten eine unveränderte, problemlose funktionssichere Verfügbarkeit gewährleisten.

Die Lösung dieser Aufgabe gelingt mit der Erfindung bei einer Verbindungskupplung der im Oberbegriff von Anspruch 1 genannten Art, umfassend jeweils ein Paar mittels Außen/Innen-Rohrgewindekombination verbindbare Kupplungshälften mit je einem Grundkörper aus Metall durch eine Ausbildung, bei welcher zumindest das Innengewinde der einen Kupplungshälfte zu einem Formstück aus elektrisch nichtleitendem Material ausgebildet ist, und bei der das Formstück im Grundkörper der Kupplungshälfte eingebettet und mit diesem vorzugsweise untrennbar verbunden ist.

Dabei hat sich eine Ausgestaltung der Erfindung als besonders vorteilhaft herausgestellt, bei welcher das nicht-leitende Material ein zäh-harter sowie verschleißresistenter Kunststoff ist. Der entscheidende Vorteil der Erfindung liegt darin, daß das als Isolierung ausgebildete Kupplungsstück jetzt nicht mehr durch den Einsatz eines separaten Isolierelementes maßlich nach oben aufbaut, sowie, daß sämtliche auftretenden Kräfte nicht mehr auf ein Kunststoff-Zwischenstück, sondern unmittelbar auf die Kupplungshälften nach der Erfindung übertragen werden. Ein wichtiger Vorteil ergibt sich weiterhin dadurch, daß durch die Ausbildung eines Kupplungsstückes als Isolierung das beim Stand der Technik bisher erforderliche separate Isolierstück wegfällt und damit auch der Zusammenbau sowie die Bedienung der Überwachungsvorrichtung für den Umfüllvorgang einfacher und damit bedienungssicherer wird.

Weitere vorteilhafte Ausgestaltungen der Erfindung sehen vor, daß der verwendete Kunststoff eine vernetzbare Zweikomponentenmischung beispielsweise auf der Basis von Polyurethan oder Epoxidharz ist und im Zustand seiner Endfestigkeit eine Härte zwischen 75 und 85 Shore besitzt. Dabei ist das Innengewinde bevorzugt in einem kreisringförmigen Kunststoffblock vorhanden, der in flüssigem Zustand in den Grundkörper einer Kupplungshälfte einformbar und darin durch eine Vernetzungsreaktion zur Erstarrung bringbar ist.

Eine alternative Lösung der vorgenannten Aufgabe gelingt darüber hinaus mit der Erfindung dadurch, daß die Isolierungen in Form einer Beschichtung, vorzugsweise einer Plasmabeschichtung im Bereich des Rohrgewindes innerhalb eines jeden Kupplungsstückes ausgebildet sind. Dabei hat sich mit Vorteil die Plasmabeschichtung als extrem widerstandsfähig, fest, abnutzungsresistent und voll isolierend erwiesen. Auch für diese alternative Lösung gelten die vorgenannten Vorteile.

Eine Ausgestaltung dieser Vorrichtung sieht vor, daß die Plasmabeschichtung aus einem Material von ausreichend hoher Festigkeit und optlmaler Isolierfähigkeit besteht.

Ein solches Material kann bspw. hochfestes Glas, Ofenschlacke, Basalt, Keramik oder Metalloxid sein. Die Verarbeitung derartiger Materialien durch ein Plasmabeschichtungsverfahren sind dem Fachmann durchaus geläufig.

Eine bevorzugte Ausgestaltung der Vorrichtung sieht vor, daß das Material Korund = Al₂O₃ ist. Dieses erfüllt hinsichtlich Festigkeit und Isoliereigenschaft sowie Verarbeitbarkeit beim Plasmabeschichtungsverfahren die an Funktion und Haltbarkeit zu stellenden Anforderungen in optimaler Weise.

Weitere Einzelheiten, Merkmale und Vorteile der Erfindung ergeben sich aus der nachstehenden Erläuterung eines in den Zeichnungen schematisch dargestellten Ausführungsbeispieles. Es zeigen:
- Figur 1: ein Schaltschema der Überwachungsvorrichtung für Umfüllvorgänge, woraus die Anordnung von isolierenden Kupplungsstücken hervorgeht;
- Figur 2 und Figur 3: ein Kupplungsstück mit Isolierung, teilweise in Ansicht, teilweise im Schnitt.

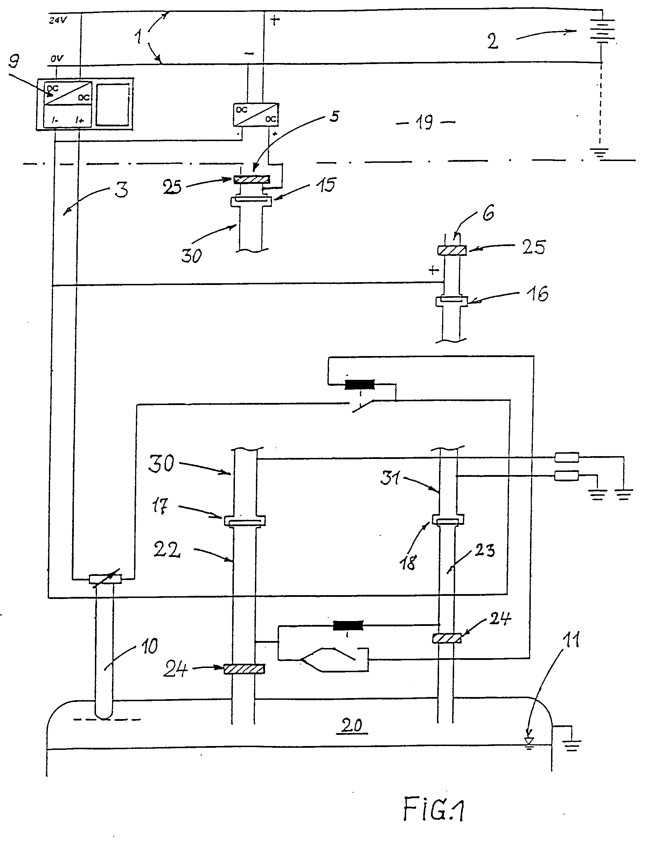

Figur 1 zeigt in einem Schalt- und Funktionsschema ein System zur Überwachung und Sicherung des Umfüllvorganges zwischen einem fiktiven Tankfahrzeug 19 und einem unterirdischen Lagerbehälter 20. Mit 11 ist der augenblickliche Füllstand im Lagerbehälter 20 bezeichnet. Darin ist in Höhe des maximal zulässigen Flüssigkeitsstandes der Grenzwertgeber 10 angeordnet. Am Tankfahrzeug 19 ist eine Spannungsversorgung 1 mit der Stromquelle 2, bspw. einer üblichen 24-Volt-Batterie angeordnet. Die Stromversorgung 1 des Grenzwertgebers 10 weist über einen DC/DC-Wandler 9 einen potentialfreien Stromkreis 3 auf, mit mindestens einer dem Füllschlauch 30 und/oder dem Gaspendelschlauch 31 und deren Armaturen 15 bis 18 zugeordneten und mit diesen unmittelbar oder über mechanisch/elektrodynamisch anregbare Mittel (nicht gezeigt) zusammenwirkenden zusätzlichen Schaltkreisanordnung, welche den Stromkreis 3 des Grenzwertgebers 10 geschlossen hält, solange der Füllschlauch 30 und Gaspendelschlauch 31 korrekt mit ihren Armaturen 15 bis 18 an den lagerbehälterseitigen oder fahrzeugseitigen Anschlüssen 5, 6; 22, 23 angeschlossen oder nicht unterbrochen sind, dagegen den Stromkreis 3 unterbricht, sofern Armaturen 15 bis 18 oder Schläuche 30, 31 nicht korrekt angeschlossen sind bzw. ganz oder teilweise abgerissen sind.

Damit die Stromkreise einwandfrei überwacht werden können und nicht unkontrolliert Nebenschlüsse über die Rohre 5, 22; 6, 23 zustande kommen, sind bei der Überwachungsvorrichtung nach dem Stand der Technik gemäß Fig. 1 separate Isolierstücke in die Rohrleitungen 5, 6 sowie 22, 23 eingesetzt. Abgesehen von der Herstellung der Isolierstücke selbst und dem Aufwand an Montage bauen diese Isolierstücke nach dem Einbau maßlich nach oben auf und bilden zudem aufgrund der hohen mechanischen Beanspruchung eine Schwachstelle, die zu äußerst unangenehmen Betriebsunterbrechungen und Störungen führen kann.

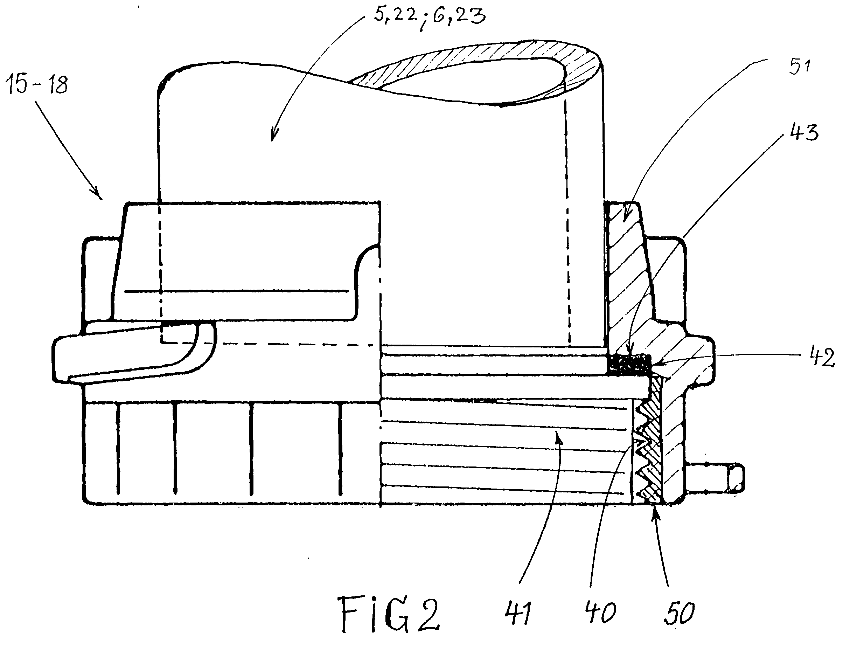

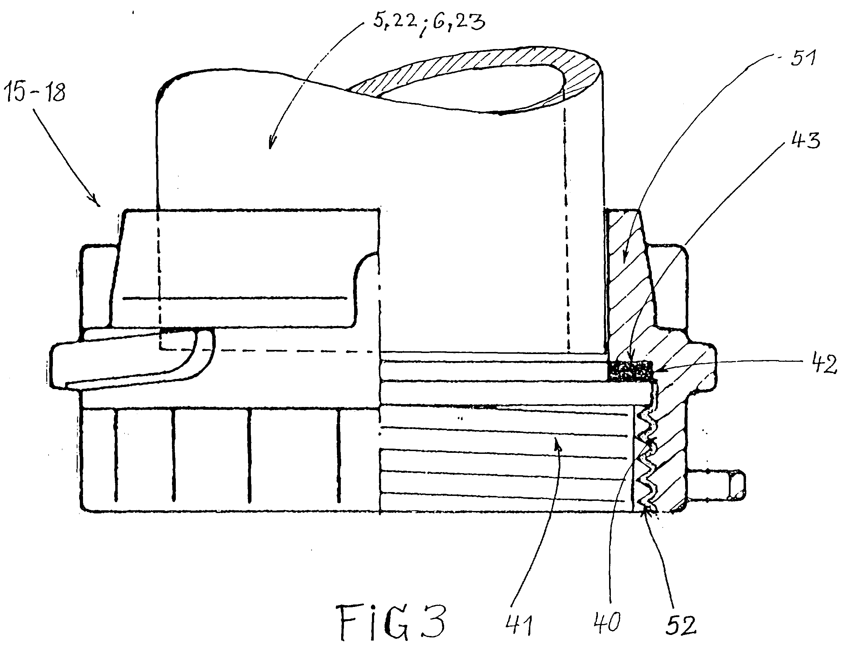

Ein zur Abhilfe dieses Mißstandes nach der Erfindung ausgebildetes Kupplungsstück 15 bis 18 ist in der Fig. 2 und Fig. 3 dargestellt.

Die Kupplungsstücke 15 bis 18 sind, wie aus dem Schaltschema ersichtlich, mit den Rohrstücken 5, 22; 6, 23 mechanisch verbunden.

Nach der Erfindung weist jedes Kupplungsstück 15-18 einen Grundkörper 51 aus Metall auf, bei welchem zumindest das Innengewinde 40 einer Kupplungshälfte 15 - 18 der Rohrgewindekombination 41 zu einem Formstück 50 aus elektrisch nicht-leitendem Material ausgebildet ist, und das Formstück 50 im Grundkörper 51 der Kupplungshälfte eingebettet und mit dieser untrennbar verbunden ist.

Erfindungsgemäß besteht das Formstück 50 aus zäh-hartem sowie verschleißresistentem Material von Kunststoff und ist beispielsweise eine vernetzbare Zweikomponentenmischung auf der Basis von Polyurethan oder Epoxidharz mit einer Härte zwischen 75 und 85 Shore bei Endfestigkeit im ausgehärteten Zustand.

Aus der Fig. 2 ist zudem erkennbar, daß das Innengewinde 40 in dem Formstück 50, das als ein kreisringförmiger Kunststoffblock ausgebildet ist, vorhanden ist, der in flüssigem Zustand in den Grundkörper 51 einformbar und darin durch eine Vernetzungsreaktion der Zweikomponentenmischung zur Erstarrung gebracht ist.

Nach Ermessen des Fachmannes kann die Gewindeform auch von vornherein mit eingeformt, oder im nachhinein aus dem erstarrten Kunststoffblock 50 durch spanabhebende Bearbeitung herausgearbeitet sein.

Nach einer Alternativausführung der Erfindung kann jedes Kupplungsstück 15 - 18 eine Plasmabeschichtung 52 im Bereich der Rohrgewindekombination 41 aufweisen. Die Plasmabeschichtung kann selbst das Gewinde 41 sein, oder auf ein eingeformtes Gewinde 41 aufgetragen sein (Fig. 3). Am Grunde des Gewindes 41, anschließend an die Plasmabeschichtung 52, ist in eine Aufnahmenut 42 ein Isolier- und Dichtungsring 43 aus Gummi oder Kunststoff eingelegt, der ebenfalls nichtleitend ist.

Mit Vorzug besteht die Plasmabeschichtung 52 aus einem Material von vergleichsweise hoher Festigkeit und optimaler Isolierfähigkeit. Es kann sich dabei um hochfestes Glas, Ofenschlacke, Basalt, Keramik oder Metalloxid handeln.

Als besonders geeignet und bevorzugt hat sich Korund = Al₂O₃ im praktischen Betrieb bewährt.

Die Erfindung ist zweckmäßig, unkompliziert und mit ökonomischen Mitteln ausführbar und beseitigt eine beim Stand der Technik bisher als nachteilig empfundene Schwachstelle einer Vorrichtung insbesondere zur Überwachung des Umfüllvorganges zwischen einem Tankfahrzeug und einem unterirdischen Lagerbehälter. Insofern löst die Erfindung in optimaler Weise die eingangs gestellte Aufgabe.

## Patentansprüche

1. Isolierung einer Verbindungskupplung zwischen Schläuchen oder zwischen Rohren bzw. zwischen Schläuchen und Rohren, umfassend jeweils ein Paar mittels einer Außen/Innen-Rohrgewindekombination (41) verbindbare Kupplungshälften (15-18) mit je einem Grundkörper (51) aus Metall,
**dadurch gekennzeichnet,**
daß zumindest das Innengewinde (40) der einen Kupplungshälfte zu einem Formstück (50) aus elektrisch nicht-leitendem Material ausgebildet ist, und daß das Formstück (50) im Grundkörper (51) der Kupplungshälfte eingebettet und mit diesem vorzugsweise untrennbar verbunden ist.

2. Isolierung nach Anspruch 1,
**dadurch gekennzeichnet,**
daß das nicht-leitende Material ein zäh-harter sowie verschleißresistenter Kunststoff ist.

3. Isolierung nach Anspruch 1 oder 2,
**dadurch gekennzeichnet,**
daß das nicht-leitende Material eine vernetzbare Zweikomponentenmischung beispielsweise auf Polyurethanbasis ist.

4. Isolierung nach Anspruch 1 oder 2,
**dadurch gekennzeichnet,**
daß das nicht-leitende Material eine vernetzbare Zweikomponentenmischung beispielsweise auf der Basis von Epoxidharz ist.

5. Isolierung nach einem der Ansprüche 3 oder 4,
**dadurch gekennzeichnet,**
daß der Kunststoff im vernetzten Zustand seiner Endfestigkeit eine Härte zwischen 75 und 85 Shore besitzt.

6. Isolierung nach einem oder mehreren der Ansprüche 1 bis 5,
**dadurch gekennzeichnet,**
daß das Innengewinde (40) in einem kreisringförmigen Kunststoffblock vorhanden ist, der in flüssigem Zustand in den Grundkörper einer Kupplungshälfte (15-18) einformbar und darin durch eine Vernetzungsreaktion der Zweikomponentenmischung zur Erstarrung bringbar ist.

7. Isolierung nach einem oder mehreren der Ansprüche 1 bis 6,
**dadurch gekennzeichnet,**
daß die Verbindungskupplungen (15-18)bei einer Vorrichtung zur Überwachung des Umfüllvorganges zwischen einem Tankfahrzeug (19) und einem unterirdischen Lagerbehälter (20) angeordnet sind, wobei Schläuche (30, 31) mit Anschlußarmaturen (15, 16) einer Umfüllvorrichtung (5, 6) des Tankfahrzeuges (19), mit einer Spannungsversorgung (1, 2) und mit einem die Umfüllvorrichtung schaltenden Füllstands-Grenzwertgeber (10) zusammenwirkbar an Umfüllrohre (22, 23) des Lagerbehälters (20) anschließbar sind und der Grenzwertgeber (10) bei fehlerhaftem Umfüllvorgang den Stromkreis (3) und damit die Umfüllvorrichtung abschaltet, wobei ein eigensicherer Stromkreis über leitfähige Schläuche (30, 31) des Tankwagens (19) geschlossen und die Isolierungen zur Verhinderung eines unkontrollierbaren Nebenschlusses über die Rohre (5, 22 bzw. 6, 23) sowie die Kupplungen (15-18) in die Rohre (5, 6; 22, 23) einsetzbar sind.

8. Isolierung einer Verbindungskupplung zwischen Schläuchen oder zwischen Rohren bzw. zwischen Schläuchen und Rohren, umfassend jeweils ein Paar mittels einer Außen/Innen-Rohrgewindekombination (41) verbindbare Kupplungshälften (15-18) aus Metall,
**dadurch gekennzeichnet,**
daß sie in Form einer Beschichtung (52) bevorzugt einer Plasmabeschichtung (52), im Bereich der Rohrgewindekombination (41) innerhalb eines jeden Kupplungsstückes (15-18) ausgebildet ist.

9. Isolierung nach Anspruch 8,
**dadurch gekennzeichnet,**
daß die isolierende Plasma- oder Kunststoffbeschichtung auf das Rohrgewinde (40) aufgetragen bzw. mindestens ein Teil des Rohrgewindes (40) ist.

10. Isolierung nach Anspruch 8,
**dadurch gekennzeichnet,**
daß die Plasmabeschichtung (52) aus einem Material von hoher Festigkeit und optimaler Isolierfähigkeit besteht.

11. Isolierung nach Anspruch 8,
**dadurch gekennzeichnet,**
daß das Material bspw.hochfestes Glas, Ofenschlacke, Basalt, Keramik oder Metalloxid ist.

12. Isolierung nach Anspruch 8,
**dadurch gekennzeichnet,**
daß das Material Korund = Al₂O₃ ist.
